# EUROPÄISCHE PATENTANMELDUNG

(11) **EP 2 549 446 A2**
(43) Veröffentlichungstag der Anmeldung: **23.01.2013**
(21) Anmeldenummer: 12188957.0
(22) Anmeldetag: 01.06.2010
(51) Int. Cl.: G07D 7/12, G07D 7/20

(54) **Identifizierung und/oder Authentifizierung von Gegenständen anhand ihrer Oberflächenbeschaffenheit**

(30) Priorität: 10.06.2009 DE 102009025061; 18.12.2009 DE 102009059054
(62) Teilanmeldung aus: 10723934.5
(71) Anmelder: Bayer Intellectual Property GmbH, 40789 Monheim (DE)
(72) Erfinder: Gerigk, Markus, 50735 Köln (DE); Bäcker, Andreas, 42349 Wuppertal (DE); Birsztejn, Thomas, 41540 Dormagen (DE); Imhäuser, Ralf, 40764 Langenfeld (DE); Roth, Christian, 51373 Leverkusen (DE); Speth, Walter, Düren 52351 (DE); Hoff, Simon, Pulheim 50259 (DE)
(74) Vertreter: BIP Patents

(57) **Zusammenfassung**

Gegenstand der vorliegenden Erfindung ist ein Verfahren zur Identifizierung und/oder Authentifizierung von Gegenständen anhand ihrer Oberflächenbeschaffenheit. Gegenstand der vorliegenden Erfindung ist ferner ein Sensor zur Abtastung einer Oberfläche.

## Beschreibung

Gegenstand der vorliegenden Erfindung ist ein Verfahren zur Identifizierung und/oder Authentifizierung von Gegenständen anhand ihrer Oberflächenbeschaffenheit. Gegenstand der vorliegenden Erfindung ist ferner ein Sensor zur Abtastung einer Oberfläche.

Die Oberflächenbeschaffenheit von Objekten spielt bei vielen technischen Produkten und Verfahren eine wichtige Rolle, beispielsweise im Formenbau und bei technischen Gleit- oder Sichtflächen. Bei Papier ist die Oberflächenstruktur ein wichtiges Qualitätsmerkmal z.B. im Zusammenhang mit der Bedruckbarkeit.

Dementsprechend gibt es eine Vielzahl an Messmethoden zur Ermittlung der Oberflächenstruktur und zur Ermittlung von charakteristischen Kennzahlen für die Oberflächenbeschaffenheit. Messmethoden, deren Ergebnis die Topographie der Oberfläche ist, werden auch als direkte Methoden bezeichnet. Die indirekten Methoden liefern charakteristische Kennzahlen wie z.B. für die Rauigkeit, ohne die tatsächliche Gestalt der Oberfläche selbst zu messen. Ein Beispiel einer indirekten Methode ist die Methode nach Bekk zur Bestimmung der Rauigkeit einer Papier- oder Kartonprobe durch Vermessen eines Luftstromes, der zwischen einer Blende und der Probenoberfläche strömt.

Bei den direkten Methoden können taktile und optische Verfahren unterschieden werden. Mit taktilen Verfahren werden Oberflächen mit mechanischen Tastern punktweise abgetastet. Die Tasterauslenkung wird elektronisch oder optoelektronisch gemessen. Das Ergebnis ist ein über dem Tastweg aufgezeichnetes Höhensignal, das so genannte Oberflächenprofil. Durch Abtasten eng aneinander liegender Oberflächenprofile erhält man die flächige Abtastung der Topographie. Ähnliche Verfahren, die berührungslos arbeiten, sind Rasterelektronen- oder Rasterkraftmikroskopie (im so genannten *non-contact mode*)*.*

Ein Beispiel eines optischen Verfahrens zur Topographiebestimmung ist die dynamische Laserfokussierung (siehe beispielsweise Wochenblatt für Papierfabrikation, ISSN0043-7131, 117. Jahrgang, April 1989, Nr. 7; Seiten 271 bis 274). Bei der dynamischen Laserfokussierung wird ein Laser mittels einer Linse auf die Oberfläche fokussiert. Die Linse kann mittels eines Stellmotors senkrecht zur Oberfläche (in z-Richtung) bewegt werden. Ein Sensor ermittelt die jeweilige z-Position der Linse in fokussierter Stellung und liefert somit die Topographieinformation während die Probe durch einen xy-Tisch unter der Linse horizontal bewegt wird.

Weiterhin können topographische Informationen einer Oberfläche auch beispielsweise mit einem akustischen oder einem chromatische Nahfeldsensor, mit einem Wirbelstromsensor oder einem Phasen-Weißlichtinterferometer gewonnen werden.

Aus den ermittelten Topographien lassen sich wiederum Kennzahlen ermitteln wie beispielsweise der Mittenrauhwert Rₐ oder die Rauhtiefe R_{z} (siehe DIN EN ISO 4287:1998). Die genannten Kenngrößen werden an einer Einzelmessstrecke definiert und werden in der Regel als Mittelwerte aus mehreren Einzelmessstrecken berechnet. Für Rauheitskenngrößen sind fünf Einzelmessstrecken Standard (DIN EN ISO 4288:1998).

Es ist demnach üblich, die mit direkten Methoden aufgenommenen Datenmengen zur Oberflächentopographie auf wenige Kennzahlen zu verdichten. Die Verdichtung der Datenmengen auf wenige Kennzahlen erlaubt eine Klassifizierung von Objekten. Durch die Verdichtung der Datenmengen auf wenige Kennzahlen geht jedoch die Individualität des einzelnen Objekts verloren, denn aus den Kennzahlen lässt sich nur auf Materialklassen schließen, nicht jedoch auf einzelne Objekte.

Die Erfassung und Wiedererkennung von Objekten spielt jedoch beispielsweise bei der Produktverfolgung und im Zusammenhang mit Produktfälschungen eine wichtige Rolle.

Die automatisierte Erkennung von Objekten anhand von z.B. Strichcodes ist in diesem Zusammenhang allgemein bekannt. Strichcodes (Barcodes) sind auf Waren und/oder Verpackungen aufgebracht und erlauben eine maschinelle Identifizierung der Waren zur Ermittlung z.B. des Preises. Sie bieten jedoch keinen Fälschungsschutz, da sie sich leicht kopieren und auf andere Objekte übertragen lassen.

Ausweise, Banknoten, Produkte etc. werden heute zur Fälschungssicherung mit Elementen versehen, die nur mit Spezialwissen und/oder hohem technischen Aufwand nachgemacht werden können. Solche Elemente werden hier als Sicherheitselemente bezeichnet. Die Echtheit eines Objekts kann anhand des Vorhandenseins eines oder mehrerer Sicherheitselemente überprüft werden.

Optische Sicherheitselemente wie z.B. Wasserzeichen, Spezialtinten, Guilloche-Muster, Mikroschriften und Hologramme sind weltweit etabliert. Eine Übersicht über optische Sicherheitselemente, die insbesondere aber nicht ausschließlich für den Dokumentenschutz geeignet sind, gibt das folgende Buch: Rudolf L. van Renesse, Optical Document Security, Third Edition, Artech House Boston/London, 2005 (S. 63-259).

Ein Großteil der heutzutage kommerziell erhältlichen Sicherheitselemente erlaubt jedoch keine Individualisierung, d.h. viele Objekte tragen dasselbe Sicherheitselement. Die Objekte, die dasselbe Sicherheitselement tragen, lassen sich nicht anhand des Sicherheitselements unterscheiden.

Oftmals ist es aber gewünscht, ein einzelnes Objekt aus einer Vielzahl vergleichbarer Objekte eindeutig und sicher identifizieren zu können. Das in PCT/EP/2009/002809 beschriebene Sicherheitselement ermöglicht eine Individualisierung einzelner Objekte und damit die sichere und eindeutige Identifizierung. Es wäre jedoch vorteilhaft, eine Identifizierung und/oder Authentifizierung eines Objekts auch ohne Hilfsmittel wie Sicherheitselemente vornehmen zu können.

Nach dem Stand der Technik sind auch Verfahren zur Identifizierung und Authentifizierung bekannt, bei denen keine weiteren Merkmale als diejenigen verwendet werden, die das Objekt selbst bereitstellt.

In WO2005/088533(A1) ist beispielsweise ein Verfahren beschrieben, mit dem Gegenstände mittels kohärenter Strahlung identifiziert und authentifiziert werden können. Bei dem Verfahren wird kohärente Strahlung auf die Oberfläche des Gegenstands fokussiert und die Oberfläche abgetastet. Mittels Fotodetektoren wird die von der Oberfläche reflektierte Strahlung detektiert. Die erfasste reflektierte Strahlung stellt ein charakteristisches Reflexionsmuster dar, das für eine Vielzahl von unterschiedlichen Materialien einzigartig ist und sich nur sehr schwer nachahmen lässt, da es auf Zufälligkeiten bei der Herstellung und/oder Verarbeitung des Gegenstands zurückzuführen ist. Die charakteristischen Reflexionsmuster zu einzelnen Gegenständen werden in einer Datenbank gespeichert, um jeden Gegenstand zu einem späteren Zeitpunkt identifizieren und/oder authentifizieren zu können. Hierzu wird ein Gegenstand erneut vermessen und die charakteristischen Reflexionsmuster mit gespeicherten Referenzdaten verglichen.

In WO2005/088533(A1) wird ausgeführt, dass es sich bei dem erfassten Reflexionsmuster um eine Mischung aus Speckle-Muster und Streustrahlung handelt. Nachteilig an dem in WO2005/088533(A1) beschriebenen Verfahren ist, dass kohärente Strahlung verwendet werden muss. Dem Fachmann ist bekannt, dass Quellen für kohärente Strahlung deutlich teurer sind als nicht-kohärente Strahlenquellen.

Ferner ist das in WO2005/088533(A1) beschriebene Verfahren auf Gegenstände beschränkt, die durch Bestrahlung nicht beschädigt werden und die einen ausreichenden Teil der eingestrahlten Strahlung auch wieder reflektieren. Lichtempfindliche Gegenstände oder Gegenstände mit einem hohen Absorptionsvermögen für elektromagnetische Strahlung können nicht erfasst und später eindeutig erkannt werden.

Ausgehend vom beschriebenen Stand der Technik stellt sich damit die Aufgabe, ein Verfahren bereitzustellen, mit dem eine Vielzahl an unterschiedlichen Gegenständen identifiziert und/oder authentifiziert werden kann. Das gesuchte Verfahren soll die Unterscheidung von gleichartigen Gegenständen ermöglichen. Dabei soll das gesuchte Verfahren ohne teure Hilfsmittel, wie beispielsweise individualisierte Hologramme oder dergleichen auskommen, anhand derer eine Individualisierung von gleichartigen Gegenständen nach dem Stand der Technik erfolgt. Das gesuchte Verfahren sollte kostengünstig sein, intuitiv und einfach auszuführen sein, flexibel einsetzbar und erweiterbar sein, reproduzierbare und übertragbare Ergebnisse liefern sowie serientauglich sein.

Überraschend wurde gefunden, dass Gegenstände anhand ihrer Oberflächenbeschaffenheit identifiziert und authentifiziert werden können. Dabei verfügt die Oberfläche von Gegenständen über individuelle Merkmale, die für den jeweiligen Gegenstand charakteristisch sind. Diese Merkmale erlauben die Unterscheidung von gleichartigen Gegenständen.

Unter gleichartigen Gegenständen werden solche Gegenstände verstanden, die augenscheinlich gleich, aber nicht identisch sind, wie z.B. die einzelnen Blätter eines Stapels Papier oder einzelne Bauteile aus einer Serienfertigung.

Die individuelle Oberflächenbeschaffenheit ist dabei überraschenderweise nicht auf Typen von Gegenständen oder Materialien beschränkt, sondern gilt prinzipiell für alle Gegenstände. So kann man überraschenderweise selbst bei polierten Spiegeln, bei denen man von einer glatten Oberfläche ohne nennenswerte Oberflächenstruktur sprechen würde, im atomaren Bereich eine individuelle Oberflächenbeschaffenheit ausmachen.

Überraschend wurde gefunden, dass die Oberflächenbeschaffenheit von vielen Gegenständen so robust ist, dass sie auch nach längerer Zeit noch weitestgehend unverändert ist, sodass sie zur Identifizierung und/oder Authentifizierung des jeweiligen Gegenstandes herangezogen werden kann. Da sich die Oberflächenbeschaffenheit durch eine Vielzahl unterschiedlicher Messmethoden bestimmen lässt, können verschiedene Typen von Gegenständen sicher identifiziert und/oder authentifiziert werden. Sollte ein Gegenstand lichtempfindlich sein, so könnte die Ermittlung der Oberflächenbeschaffenheit mit einem taktilen Verfahren erfolge. Sollte ein Gegenstand druckempfindlich sein, so könnte die Ermittlung der Oberflächenbeschaffenheit berührungslos z.B. mittels eines optischen Verfahren erfolgen.

Unter einem Gegenstand wird jeder feste Körper verstanden. Die Oberfläche des Körpers trennt ihn vom umgebenden Medium (meistens Luft).

Unter Oberflächenbeschaffenheit wird die dreidimensionale Struktur der Oberfläche eines Gegenstands (Topographie) verstanden. Die Begriffe Oberflächenbeschaffenheit und Topographie werden hier synonym verwendet. Ein Oberflächenprofil ist das Profil, das sich durch den (gedachten) Schnitt einer Oberfläche eines Gegenstands mit einer vorgegebenen Ebene ergibt (siehe z.B. DIN EN ISO 4287:1998, Bild 2). Topographie und Oberflächenprofil werden zusammen als Oberflächenstruktur bezeichnet.

Unter Identifizierung wird ein Vorgang verstanden, der zum eindeutigen Erkennen eines Gegenstandes dient.

Unter Authentifizierung wird der Vorgang der Überprüfung (Verifikation) einer behaupteten Identität verstanden. Die Authentifizierung von Gegenständen ist die Feststellung, dass diese authentisch sind - es sich also um unveränderte, nicht kopierte und / oder nicht gefälschte Originale handelt.

### Verfahren zur Erzeugung einer Signatur eines Gegenstandes

Ein erster Gegenstand der vorliegenden Erfindung ist ein Verfahren zur Erzeugung einer Signatur eines Gegenstandes.

Das erfindungsgemäße Verfahren zur Erzeugung einer Signatur eines Gegenstandes umfasst mindestens die folgenden Schritte.
- A1:: Abtastung eines ersten Bereichs einer Oberfläche des Gegenstandes und Aufnahme eines Abtastsignals, das zumindest einen Teil der Oberflächenstruktur innerhalb dieses ersten Bereichs repräsentiert,
- A2:: Generierung einer Signatur aus dem in Schritt A1 ermittelten Abtastsignal,
- A3:: Verknüpfung der Signatur mit dem Gegenstand,
- A4:: Speicherung der Signatur in einer Form, in der sie für spätere Vergleichszwecke verfügbar ist.

Die Signatur ist eine speicherbare Information über einen Gegenstand. Sie enthält Informationen zu charakteristischen Merkmalen des Gegenstands. Dabei resultieren die charakteristischen Merkmale aus der einzigartigen Oberflächenbeschaffenheit des jeweiligen Gegenstands.

Die Abtastung eines ersten Bereichs einer Oberfläche eines Gegenstands gemäß Schritt A1 kann mit einem beliebigen Verfahren durchgeführt werden, mit dem eine Oberflächenstruktur eines Gegenstands ermittelt werden kann, z.B. mit einem taktilen oder optischen Verfahren. Hier sind bereits kommerzielle Geräte auf dem Markt, die verwendet werden können. Bevorzugt werden Verfahren eingesetzt, die eine Oberflächenstruktur berührungslos erfassen. Besonders bevorzugt werden optische Methoden eingesetzt.

Das Ergebnis der Abtastung ist ein Abtastsignal, das die Oberflächenstruktur innerhalb des ersten Bereichs repräsentiert.

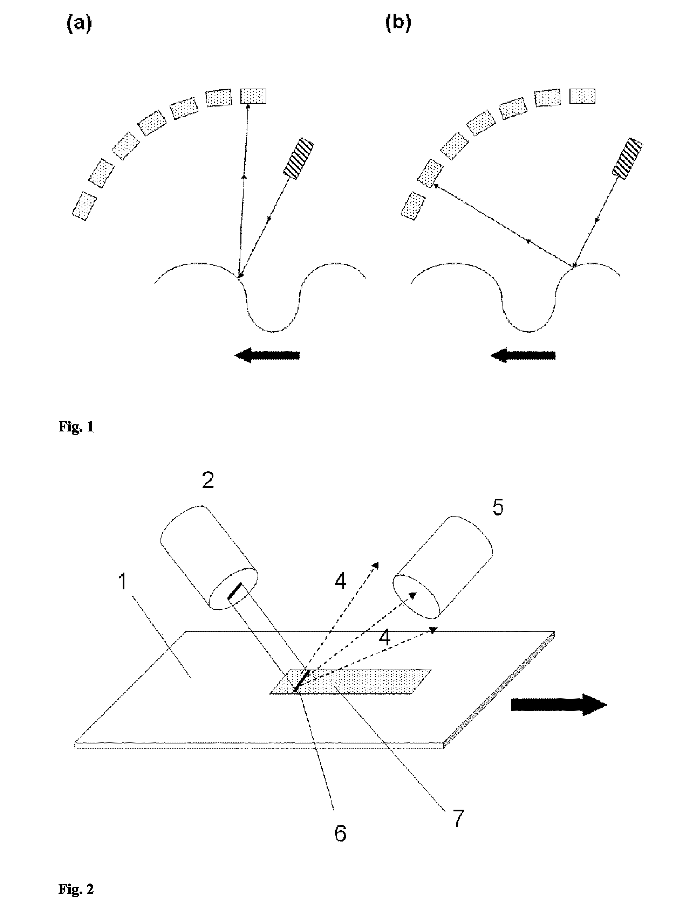

Die Abtastung kann entlang einer Linie erfolgen. In diesem Fall lässt sich aus dem Abtastsignal ein Oberflächenprofil ableiten. Ebenso ist es denkbar, eine Abtastung mäanderförmig oder entlang mehrerer, vorzugsweise parallel zueinander verlaufender Linien vorzunehmen. Die parallel verlaufenden Linien sind vorzugsweise so eng aneinanderliegend, das sich aus den Abtastsignalen eine Oberflächentopographie ableiten lässt. Dies ist beispielhaft in den Abbildungen 2, 3 und 5 der folgenden Veröffentlichung gezeigt: Wochenblatt für Papierfabrikation, ISSN0043-7131, 117. Jahrgang, April 1989, Nr. 7; Seiten 271 bis 274. Jedes einzelne Oberflächenprofil, das sich aus der Abtastung entlang einer einzigen Linie ergibt, ist für sich einzigartig. Benachbarte Oberflächenprofile weisen jedoch Ähnlichkeiten auf. Es sind also kontinuierliche Übergänge von einem Oberflächenprofil zu einem benachbarten Oberflächenprofil zu erkennen. Die einzelnen Linien, entlang derer eine Abtastung erfolgt, sollten demnach so nahe beieinander liegen, dass ein solcher kontinuierlicher Übergang erkennbar ist. Damit ist es möglich, die Bereiche zwischen benachbarten Oberflächenprofilen zu interpolieren und so die gesamte Topographie aus den einzelnen abgetasteten Linienbereichen zu approximieren.

Das Abtastsignal, das bei der Abtastung aufgenommen wird, ist von der verwendeten Messmethode abhängig. Dies soll an zwei Beispielen erläutert werden.
I. Es ist möglich, die Oberflächenstruktur durch punktweises Abtasten der Oberfläche mit einem mechanischen Taster zu ermitteln. Denkbar ist, dass der Taster auf die Oberfläche zubewegt wird, bis er diese berührt. In dem Punkt, wo der Taster die Oberfläche berührt, tritt ein Widerstand auf. Es müsste eine erhöhte Kraft angewendet werden, um den Taster in die vorher eingeschlagene Richtung weiterzubewegen (die Oberfläche steht dem Taster im Weg). Diese Weglänge bis zum Auftreten des Widerstands wird registriert und der Taster wird in seine Ausgangsposition zurückbewegt. Im nächsten Schritt wird der Taster oder der Gegenstand ein Stück zur Seite bewegt (senkrecht zur Richtung, in die der Taster auf den Gegenstand zubewegt wurde) und der Taster wird erneut auf die Oberfläche zubewegt. Auf diese Weise wird Punkt für Punkt die Weglänge ermittelt, bis jeweils ein Widerstand auftritt. Das Abtastsignal umfasst in diesem Fall Werte für die Weglänge als Funktion des Ortes. Hieraus lässt sich in einfacher Weise eine Oberflächenstruktur (Oberflächenprofil oder Topographie) ableiten.
II. Es ist auch möglich, die Oberfläche mit Hilfe eines fokussierten Laserstrahls abzutasten. Der Laserstrahl wird mittels einer Linse auf die Oberfläche fokussiert. Die Linse kann mittels eines Stellmotors senkrecht zur Oberfläche (in z-Richtung) bewegt werden. Ein Sensor ermittelt die jeweilige z-Position der Linse in fokussierter Stellung und liefert somit die Topographieinformation während die Probe durch einen xy-Tisch unter der Linse bewegt wird. Üblicherweise ist der Sensor getaktet, d.h. er nimmt mit einer konstanten Frequenz Messsignale auf. Das Abtastsignal umfasst in diesem Fall die z-Position der Linse als Funktion der Zeit (Messfrequenz). Führt der xy-Tisch eine gleichförmige Bewegung mit einer konstanten Geschwindigkeit aus, so legt er in der Zeit zwischen der Aufnahme von zwei Messwerten immer denselben Weg zurück. Es liegt also eine bekannte Korrelation zwischen der Zeit und dem Ort vor, so dass sich auch hier aus dem Abtastsignal in einer einfacher Weise die Topographie der Oberfläche ermitteln lässt. Erfolgt die Aufnahme von Messwerten taktweise mit einer gleichbleibenden Frequenz und wird eine Bewegung zwischen Abtastvorrichtung und Gegenstand vorgenommen, die nicht gleichförmig ist, so kann auch ein mechanischer Kodierer (Encoder) verwendet werden, mit dem die Zeitinformation in eine Ortsinformation transformiert werden kann. Solche Encoder sind insbesondere bei optischen Messmethoden hinreichend bekannt. Auch das in WO2005/088533(A1) beschriebene Verfahren setzt einen Encoder zur Korrelation der Zeit- mit der Ortsinformation ein (siehe dort).

In Schritt A2 des erfindungsgemäßen Verfahrens wird aus dem Abtastsignal eine Signatur erstellt. Die Signatur wird erfindungsgemäß dazu verwendet, den Gegenstand zu einem späteren Zeitpunkt zu identifizieren und/oder zu authentifizieren. Von jedem Gegenstand, der zu einem späteren Zeitpunkt identifiziert und/oder authentifiziert werden soll, muss also zunächst eine Signatur erstellt werden. Dieser Prozess, bei dem die Signatur eines Gegenstands zum ersten Mal ermittelt wird, wird hier auch als Ersterfassung oder Registrierung bezeichnet. Liegt die Signatur von einem Gegenstand vor, kann diese gespeichert werden. Zu einem späteren Zeitpunkt, an dem der Gegenstand erneut erfasst wird, d.h. seine Signatur erneut ermittelt wird, kann die gespeicherte Signatur als Referenz zu Vergleichszwecken eingesetzt werden.

Die Signatur ist also eine speicherbare und maschinell verarbeitbare Information, die aus dem Abtastsignal gewonnen und zum Zweck der Identifizierung und/oder Authentifizierung eingesetzt werden kann. Unter speicherbar wird verstanden, dass die Signatur zu einem späteren Zeitpunkt zum Beispiel für Vergleichszwecke wieder aufgegriffen werden kann. Unter maschineller Verarbeitung wird verstanden, dass die Signatur maschinell gelesen und mit einer Maschine verschiedenen Rechen- und/oder Speicheroperationen unterzogen werden kann.

Die Signatur enthält Informationen zu Merkmalen, die einen Gegenstand eindeutig kennzeichnen. Die Signatur kann das Abtastsignal selbst sein. Die Signatur kann auch eine Oberflächentopographie sein, die aus dem Abtastsignal abgeleitet worden ist, d.h. eine Ansammlung von Höheninformationen eines Oberflächenbereichs als Funktion der jeweiligen Oberflächenorte. Ebenso ist es denkbar, dass eine Signatur ein Oberflächenprofil gemäß der Definition aus DIN EN ISO 4287:1998 ist.

In der Regel wird die Signatur aus dem Abtastsignal durch verschiedene mathematische Methoden wie Filterung und/oder Untergrundabzug erzeugt. Durch diese mathematischen Methoden werden zufällige oder systematische Schwankungen, die aus Einzelmessungen resultieren, weitestgehend eliminiert. Bei papierartigen Objekten kann z.B. eine Welligkeit in einem Oberflächenprofil auftreten, die aufgrund von Benutzung des Objekts entstanden ist. Diese kann bei einer Identifizierung und/oder Authentifizierung störend sein, da sie erst im Verlauf der Zeit entstanden und somit nicht in der ursprünglichen Signatur enthalten ist. Eine solche Welligkeit kann durch geeignete Filter aus dem Abtastsignal herausgerechnet (eliminiert) werden (siehe z.B. aus DIN EN ISO 4287:1998).

Ebenso ist es denkbar, das Abtastsignal oder ein gefiltertes Abtastsignal einer mathematischen Transformation zu unterziehen, um einen Datensatz zu generieren, der sich besser zum Zweck der Identifizierung und/oder Authentifizierung eignet, als das Abtastsignal oder ein gefiltertes Abtastsignal selbst. Als Beispiel einer solchen Transformation sei eine Fourier-Transformation genannt, die eine ortsunabhängige Darstellung des Abtastsignals erzeugt.

Weiterhin ist es denkbar, charakteristische Muster aus dem Abtastsignal zu extrahieren und diese extrahierten Daten als Signatur einzusetzen (Datenreduktion).

In Schritt A3 des erfindungsgemäßen Verfahrens zur Erzeugung einer Signatur wird die Signatur mit dem Gegenstand verknüpft. Diese Verknüpfung kann physikalisch oder virtuell erfolgen. Bei einer physikalischen Verknüpfung kann die Signatur beispielsweise in Form eines optischen Codes (Barcode, Matrixcode, OCR-Text oder dergleichen) auf den Gegenstand aufgedruckt oder in den Gegenstand eingeritzt werden. Ebenso ist es denkbar, den Gegenstand mit einem Aufkleber, der die Signatur gespeichert enthält, zu verknüpfen. Auch die Anbringung eines elektronischen Datenträgers wie beispielsweise eines RFID-Chips, auf dem die Signatur gespeichert ist, an den Gegenstand ist denkbar.

Bei einer virtuellen Verknüpfung wird beispielsweise eine eindeutige Nummer, die dem jeweiligen Gegenstand zugeordnet ist (ID-Nummer, Chargen-Nummer oder dergleichen) in einer Datenbank mit der Signatur verknüpft. Die Signatur kann beispielsweise diese Nummer in einem so genannten Header (Metadaten am Anfang einer Datei) enthalten. Die Verknüpfung sorgt dafür, dass eine klare und eindeutige Zuordnung zwischen Signatur und Gegenstand besteht. Anhand der Signatur lässt sich eindeutig auf den zugehörigen Gegenstand schließen.

In Schritt A4 des erfindungsgemäßen Verfahren erfolgt die Speicherung der Signatur in einer Form, in der sie für spätere Vergleichszwecke verfügbar ist.

Die Speicherung kann beispielsweise auf einem elektronischen Speichermedium (Halbleiterspeicher), einem optischen Speichermedium (z.B. Compact Disk), einem magnetischen Speichermedium (z.B. Festplatte) oder einem anderen Medium zur Speicherung von Informationen erfolgen. Denkbar ist auch die Ablage der Signatur als optischer Code (Barcode, Matrixcode) auf einem Papier oder dem Gegenstand selbst oder als Hologramm.

Nachdem die Signatur erstmalig generiert und gespeichert ist, ist der jeweilige Gegenstand registriert und kann zu einem späteren Zeitpunkt anhand seiner Signatur identifiziert und/oder authentifiziert werden. Die gespeicherte Signatur wird hier auch als Referenzsignatur bezeichnet.

### Verfahren zur Identifizierung und/oder Authentifizierung eines Gegenstands

Ein zweiter Gegenstand der vorliegenden Erfindung ist ein Verfahren zur Identifizierung und/oder Authentifizierung eines Gegenstands mindestens umfassend die folgenden Schritte:
- B1:: Abtastung eines zweiten Bereichs einer Oberfläche des Gegenstandes und Aufnahme eines Abtastsignals, das zumindest einen Teil der Oberflächenstruktur innerhalb dieses zweiten Bereichs repräsentiert,
- B2:: Generierung einer Signatur aus dem in Schritt B1 ermittelten Abtastsignal,
- B3:: Vergleich der im Schritt B2 ermittelten Signatur mit mindestens einer Referenzsignatur,
- B4:: Generierung einer Mitteilung über die Identität und/oder Authentizität des Gegenstands in Abhängigkeit des Ergebnisses des Vergleichs in Schritt B3.

Das erfindungsgemäße Verfahren zur Identifizierung und/oder Authentifizierung eines Gegenstands ist zeitlich dem erfindungsgemäßen Verfahren zur Erzeugung einer Signatur nachgelagert.

Für die Schritte B1 und B2 gilt das bei den Schritten A1 und A2 jeweils beschriebene, d.h. diese Schritte erfolgen weitestgehend in derselben Weise.

In Schritt A1 ist allerdings ein *erster* Bereich einer Oberfläche genannt während in Schritt B1 ein *zweiter* Bereich einer Oberfläche genannt ist.

Damit eine spätere Identifizierung und/oder Authentifizierung überhaupt möglich ist, muss der Bereich, der bei der Identifizierung und/oder Authentifizierung abgetastet wird (der *zweite* Bereich) zumindest teilweise mit dem Bereich überlappen, der bei der Ersterfassung abgetastet worden ist (der *erste* Bereich). Je größer die Überlappung ist, desto höher ist die Sicherheit, mit der ein Gegenstand identifiziert und/oder authentifiziert werden kann.

In einer bevorzugten Ausführungsform des erfindungsgemäßen Verfahren sind der erste Bereich (aus Schritt A1) und der zweite Bereich (aus Schritt B1) identisch oder zumindest weitgehend identisch. Unter "weitgehend identisch" wird verstanden, dass bei einer späteren Abtastung der Oberfläche versucht wird, denselben Bereich abzutasten, der auch bei der Ersterfassung abgetastet worden ist. Im Idealfall sind der erste und der zweite Bereich also identisch - aber in der Praxis kann es Schwierigkeiten bereiten, den Bereich der Ersterfassung bei einer späteren Erfassung exakt wiederzufinden oder exakt zu "treffen". Dies ist eine Frage der Positioniergenauigkeit: wie genau gelingt es, einen Gegenstand gegenüber einer Vorrichtung zur Abtastung der Oberfläche des Gegenstands zu positionieren, so dass ein definierter Bereich der Oberfläche abgetastet werden kann?

Eine Möglichkeit, die Anforderungen an die Positioniergenauigkeit zu vermindern, besteht darin, den Bereich zur Abtastung möglichst groß zu wählen. Beträgt die absolute Genauigkeit der Positionierung beispielsweise ± 1 mm in einer Richtung und hat der Bereich in dieser Richtung eine Ausdehnung von 1 mm, so ist die Genauigkeit, mit der positioniert werden kann, unzureichend; es besteht die Gefahr, das der erste Bereich und der zweite Bereich überhaupt nicht übereinstimmen. Beträgt die Ausdehnung des Bereichs in der genannten Richtung jedoch 10 mm, so ist eine hinreichend genaue Positionierung sehr wahrscheinlich gegeben; erster Bereich und zweiter Bereich weichen in der genannten Richtung um maximal 10% voneinander ab.

Eine Vergrößerung des Bereichs ist jedoch üblicherweise auch mit einem erhöhten Zeitaufwand für die Abtastung und mit einer größeren Datenmenge für das Abtastsignal und die Signatur verbunden, so dass der Bereich nicht beliebig groß gewählt werden kann.

Eine weitere Möglichkeit, die Anforderungen an die Positioniergenauigkeit zu vermindern, liegt in der Verwendung eines so genannten Positionsgebers. Unter einem Positionsgeber werden Mittel verstanden, die einen Bereich einer Oberfläche abschließend kennzeichnen. Unter einer abschließenden Kennzeichnung eines Oberflächenbereichs wird verstanden, dass ein Bereich der Oberfläche eines Gegenstand so hervorgehoben und gegenüber anderen Oberflächenbereichen so abgegrenzt wird, dass dieser Oberflächenbereich eindeutig von allen anderen Oberflächenbereichen unterscheidbar ist und dass es keinen Oberflächenbereich gibt, für den eine Unklarheit darüber besteht, ob er dem gekennzeichneten Oberflächenbereich angehört oder nicht. Ein Positionsgeber kann beispielsweise ein Etikett mit einer Aussparung sein, das mit dem Gegenstand verbunden wird. Innerhalb der Aussparung liegt der Bereich, der abgetastet werden soll. Wird der Bereich optisch abgetastet, so ist die Oberfläche des Positionsgebers, die um die Aussparung angeordnet ist, vorzugsweise so gestaltet, dass sie bei Bestrahlung mit elektromagnetischer Strahlung ein anderes Verhalten zeigt, als der gekennzeichnete Oberflächenbereich des Gegenstands. Ist der Gegenstand beispielsweise ein papierartiges Objekt mit einem hohen Streuvermögen, wird die Oberfläche des Positionsgebers beispielsweise spiegelnd gestaltet. Bei einer taktilen Abtastung des Oberflächenbereichs des Gegenstandes hat ein Etikett mit einer Aussparung als Positionsgeber den Vorteil, dass Kanten rund um den Oberflächenbereich des Gegenstandes vorliegen, die bei einer taktilen Abtastung ein definiertes und gut erkennbares Abtastsignal liefern, das anzeigt, wo der Oberflächenbereich des Gegenstandes beginnt und wo er endet. Ein Positionsgeber verhilft also, den Bereich, der bei der Ersterfassung abgetastet worden ist, bei jeder späteren Abtastung zum Zweck der Identifizierung und/oder Authentifizierung "wiederzufinden".

Es wurde bereits darauf hingewiesen, dass es vorteilhaft sein kann, den Bereich zur Abtastung möglichst klein zu gestalten. Je kleiner der Bereich ist, desto schneller kann eine Abtastung erfolgen, desto geringer sind die Datenmengen, die als Abtastsignal oder Signatur anfallen und desto geringer ist die Rechenzeit für den Vergleich einer aktuellen Signatur mit einer oder mehreren Referenzsignaturen. Es hätte damit Vorteile, wenn die Oberfläche des Gegenstands nur entlang einer einzigen Linie abgetastet werden müsste, um eine Signatur zu erzeugen. Es wurde jedoch auch bereits erläutert, dass eine Verkleinerung des Bereichs mit einer Erhöhung der Anforderungen an die Positioniergenauigkeit einhergeht. Ist die Signatur ein Oberflächenprofil, d.h. die Höheninformation einer Oberfläche entlang einer einzigen Linie auf der Oberfläche, so kann es schwierig sein, diese eine Linie bei einer späteren Erfassung wiederzufinden.

Überraschend wurde gefunden, dass dieses Problem der steigenden Anforderungen an die Positioniergenauigkeit bei Verkleinerung des Bereichs zur Abtastung dadurch gelöst werden kann, dass der *zweite* Bereich kleiner als der *erste* Bereich ist und der *zweite* Bereich innerhalb des *ersten* Bereichs liegt.

Eine bevorzugte Ausführungsform des erfindungsgemäßen Verfahrens zur Identifizierung und/oder Authentifizierung ist demnach dadurch gekennzeichnet, dass der zweite Bereich kleiner als der erste Bereich ist und innerhalb dieses ersten Bereichs liegt.

Zur Erfüllung einer ausreichenden Positioniergenauigkeit in Schritt B1 muss der Gegenstand in Bezug zur Abtastvorrichtung so positioniert werden, dass der Abtastbereich (zweiter Bereich) innerhalb eines definierten größeren Bereichs (erster Bereich) liegt. Die Anforderungen an die Positioniergenauigkeit nimmt entsprechend mit zunehmender Größe des ersten Bereichs und mit abnehmender Größe des zweiten Bereichs ab. Mit abnehmender Größe des zweiten Bereichs nimmt natürlich auch die Datenmenge ab, die für einen Vergleich zur Verfügung steht. Generell gilt, dass eine Aussage über die Identität und/oder Authentizität eines Gegenstand mit höherer Sicherheit getroffen werden kann, je größer die Datenmenge ist, welche die Identität des jeweiligen Gegenstands beschreibt. Hier muss also eine sinnvolle Abwägung zwischen vereinfachter Positionierung und Sicherheit bei der Identifizierung und/oder Authentifizierung getroffen werden.

Die Signatur, die sich aus der Abtastung des ersten, größeren Bereichs ergibt und als Referenzsignatur gespeichert wird, ist entsprechend größer als jede Signatur, die bei einer späteren Erfassung zum Zwecke der Identifizierung und/oder Authentifizierung bei Abtastung des zweiten, kleineren Bereichs generiert wird. In dem Schritt B3 des erfindungsgemäßen Verfahrens zur Identifizierung und/oder Authentifizierung wird dementsprechend geprüft, ob die aktuelle Signatur innerhalb der Referenzsignatur vorhanden ist. Konkret könnte das so aussehen, dass bei der Ersterfassung ein erster Bereich der Oberfläche entlang einer Vielzahl an eng aneinander liegenden Linien abgetastet und so die Topographie dieses ersten Bereichs ermittelt und als Referenzsignatur gespeichert wird. Bei der Identifizierung und/oder Authentifizierung wird dann zu einem späteren Zeitpunkt beispielsweise nur das Höhenprofil entlang einer einzigen Linie (Oberflächenprofil), die sich innerhalb des ersten Bereichs befindet, aufgenommen. In Schritt B3 wird geprüft, ob die Oberflächentopographie des ersten Bereichs an irgendeiner Stelle ein entsprechendes Oberflächenprofil aufweist. Dabei ist es nicht erforderlich, dass die Linie, entlang der bei der Identifizierung und/oder Authentifizierung eine Abtastung erfolgt ist, auch genau eine der Linien ist, die bei der Ermittlung der Topographie im Rahmen der Ersterfassung zur Abtastung herangezogen worden ist. Wie oben bereits festgestellt, liegen die einzelnen Linien bei der Ermittlung der Topographie vorzugsweise so eng beieinander, dass zwischen ihnen ein kontinuierlicher Übergang erkennbar ist. Es reicht demnach aus, dass die einzelne Linie innerhalb des Bereichs der Vielzahl an Linien liegt. Aus entsprechenden Gründen ist es auch nicht erforderlich, dass die einzelne Linie exakt parallel zu der Vielzahl an Linien verläuft. Durch den kontinuierlichen Übergang der einzelnen Oberflächenprofile, die die Topographie bilden, lässt sich mit bekannten mathematischen Verfahren die gesamte Topographie approximieren und somit jedes beliebige Oberflächenprofil innerhalb der Topographie berechnen.

Die bevorzugte Ausführungsform des erfindungsgemäßen Verfahrens zur Identifizierung und/oder Authentifizierung eines Gegenstands, bei dem der zweite Bereich kleiner ist als der erste Bereich, lässt sich dort vorteilhaft einsetzen, wo genügend Zeit zur Ersterfassung besteht, während die Zeit zur Identifizierung und/oder Authentifizierung im Vergleich hierzu beschränkt ist.

Als Beispiele seien Kunstgegenstände oder Schmuck genannt. Diese werden oftmals in Handfertigung erstellt. Die Handfertigung benötigt im Vergleich zu maschinellen Herstellungsverfahren mehr Zeit. Daher fällt es nicht ins Gewicht, wenn zur Erstellung der Referenzsignatur ein entsprechender Zeitaufwand betrieben wird, indem ein großer (erster) Bereich abgetastet wird. Die spätere Identifizierung und/oder Authentifizierung z.B. zur Routineüberprüfung anhand eines kleineren Bereichs kann entsprechend schneller erfolgen.

Überraschend wurde gefunden, dass der erste und zweite Bereich auch so gestaltet werden können, dass der zweite Bereich größer als der erste Bereich ist und diesen ersten Bereich vollständig umfasst.

Eine weitere bevorzugte Ausführungsform des erfindungsgemäßen Verfahrens zur Identifizierung und/oder Authentifizierung eines Gegenstands ist daher dadurch gekennzeichnet, dass der zweite Bereich größer ist als der erste Bereich und diesen ersten Bereich vollständig umfasst.

Bei der Ersterfassung wird also eine Referenzsignatur erzeugt, die aus einem vergleichsweise kleinen Abtastbereich resultiert. Bei einer späteren Erzeugung einer Signatur zum Zweck der Identifizierung und/oder Authentifizierung wird ein entsprechend größerer Bereich abgetastet, eine Signatur erzeugt und in Schritt B3 untersucht, inwieweit eine Referenzsignatur in der aktuellen Signatur vorhanden ist.

Durch diese bevorzugte Ausführungsform ergeben sich dieselben Vorteile hinsichtlich Positioniergenauigkeit und verringerten Datenmengen wie in dem Fall, bei dem der zweite Bereich innerhalb des ersten Bereichs liegt (siehe oben). Eine solche Ausführungsform ist dann vorteilhaft, wenn die Ersterfassung im Vergleich zur späteren Identifizierung und/oder Authentifizierung zeitkritisch ist. Dies kann zum Beispiel bei einer maschinellen Fertigung der Fall sein, wo die gefertigten Gegenstände in großer Zahl anfallen und mit großer Geschwindigkeit auf einem Fließband transportiert werden. Hier ist es vorteilhaft, nur einen kleinen Bereich des jeweiligen Gegenstands in kürzester Zeit abzutasten (Schritt A1), um den jeweiligen Gegenstand erstmalig zu erfassen und eine entsprechende Referenzsignatur zu erzeugen. Bei der späteren Identifizierung und/oder Authentifizierung fallen die Gegenstände gegebenenfalls in geringer Zahl an und es besteht mehr Zeit, einen größeren Bereich in Schritt B 1 abzutasten, um sicherzustellen, dass der erste Bereich (aus Schritt A1) umfasst wird.

In Schritt B3 des erfindungsgemäßen Verfahrens zur Identifizierung und/oder Authentifizierung eines Gegenstands erfolgt, wie bereits angesprochen, der Vergleich der aktuell erzeugten Signatur mit einer oder mehreren Referenzsignaturen. Hierbei kann zwischen einem so genannten 1:1-Abgleich und einem so genannten 1:n-Abgleich unterschieden werden. Bei einem 1:1-Abgleich erfolgt lediglich der Vergleich von zwei Signaturen. Dies ist beispielsweise der Fall, wenn bereits Informationen zur vermeintlichen Identität des Gegenstands vorliegen, die noch überprüft werden sollen (Authentifizierung). Es ist beispielsweise denkbar, dass der Gegenstand einen Barcode trägt, der auf die Identität des Gegenstands hinweist. Anhand der vermeintlichen Identität kann die Referenzsignatur ermittelt werden, die dem jeweiligen Gegenstand zugeordnet ist. Diese wird dann mit der aktuell generierten Signatur verglichen.

Ist die Identität nicht bekannt und soll diese anhand der aktuell generierten Signatur ermittelt werden, so wird die aktuell generierte Signatur mit einer Anzahl n an in Frage kommenden Referenzsignaturen verglichen (1:n-Abgleich), um diejenige Referenzsignatur zu finden, die mit der aktuell generierten Signatur übereinstimmt (Identifizierung).

Der Vergleich selbst kann mit mathematischen Methoden, die dem Fachmann hinlänglich bekannt sind, erfolgen. Es können z.B. bekannte Verfahren des Pattern Matching eingesetzt werden, bei denen nach Ähnlichkeiten zwischen Datensätzen gesucht wird (siehe z.B. Image Analysis and Processing: 8th International Conference, ICIAP '95, San Remo, Italy, September 13-15, 1995. Proceedings (Lecture Notes in Computer Science), WO 2005088533(A1), WO2006016114(A1), C. Demant, B. Streicher-Abel, P. Waszkewitz, Industrielle Bildverarbeitung, Springer-Verlag, 1998, S. 133 ff, J. Rosenbaum, Barcode, Verlag Technik Berlin, 2000, S. 84 ff, US 7333641 B2, DE10260642 A1, DE10260638 A1, EP1435586B1). Auch optische Korrelationsmethoden sind denkbar.

Das Ergebnis des Vergleichs, z.B. der Grad der Übereinstimmung zwischen den verglichenen Signaturen, wird dann in Schritt B4 an einen Benutzer einer entsprechenden Vorrichtung in Form einer sicht- oder hörbaren Mitteilung ausgegeben (Monitor, Drucker, Lautsprecher, o.ä.).

Nachdem die erfindungsgemäßen Verfahren in allgemeiner Form vorgestellt worden sind, soll nun näher auf konkrete Ausführungsformen eingegangen werden, ohne die Erfindung jedoch hierauf zu beschränken.

### Es zeigen:

- Figur 1 (a), (b):: Schematische Darstellung zur optischen Abtastung einer Oberfläche
- Figur 2:: Schematische Darstellung zur optischen Abtastung einer Oberfläche mit einem linienförmigen Strahlprofil
- Figur 3:: Schematische Darstellung eines erfindungsgemäßen Sensors zur Abtastung von Oberflächen
- Figuren 4a-4c:: Abtastsignale von einer Oberfläche

Die Abtastung eines Oberflächenbereichs erfolgt bevorzugt optisch, das heißt unter Verwendung einer Quelle für elektromagnetische Strahlung und mindestens einem Detektor für elektromagnetische Strahlung (auch als Fotodetektor bezeichnet). Vorzugsweise wird als Strahlenquelle eine Quelle eingesetzt, die elektromagnetische Strahlung mit einer hohen Intensität erzeugen kann. Zum Beispiel weist Laserstrahlung bekanntlich eine hohe Leistungsdichte auf und sie lässt sich gut bündeln, so dass die Ausmaße des fokussierten Laserstrahls in der Fokusebene entsprechend gering gehalten werden können. Je geringer die Ausmaße des Abtaststrahls in der Fokusebene sind, desto höher ist die Genauigkeit, mit der die Oberfläche abgetastet werden kann.

Das Querschnittsprofil des Abtaststrahls in der Fokusebene sollte bei den Abtastungen gemäß der Schritte A1 und B1 weitestgehend gleich sein, damit bei dem späteren Vergleich von Signaturen gemäß Schritt B3 keine zu großen Unterschiede zwischen den Signaturen infolge von unterschiedlichen Auflösungen bei der Abtastung vorliegen. Unter dem Querschnittsprofil wird die zweidimensionale Intensitätsverteilung der Strahlung in der Fokusebene verstanden.

In Figur 1 ist schematisch dargestellt wie die Abtastung eines Oberflächenbereichs mit Hilfe eines Abtaststrahls vollzogen werden kann.

Die Figur zeigt die Oberfläche 1 eines Gegenstands sowie eine Anordnung umfassend eine Quelle für elektromagnetische Strahlung 2 und eine Vielzahl von Detektoren 5 für elektromagnetische Strahlung. Die Oberfläche 1 ist aus Gründen der besseren Anschaulichkeit im Vergleich zu der Strahlenquelle 2 und den Detektoren 5 stark vergrößert dargestellt.

Von der Strahlenquelle kann ein Abtaststrahl 3 auf die Oberfläche 1 des Gegenstands gesandt werden. Der Gegenstand wird in Bezug zur Anordnung aus Strahlenquelle und Detektoren bewegt (gekennzeichnet durch den dicken schwarzen Pfeil). Dabei überstreift der Abtaststrahl die Oberfläche. Der Abtaststrahl wird von der Oberfläche entsprechend dem Reflexionsgesetz reflektiert. Je nach Krümmung der Oberfläche gelangt die reflektierte Strahlung 4 in einen der Detektoren. Auf diese Weise kann die Oberfläche abgetastet und ein Abtastsignal aufgenommen werden. Aus dem Abtastsignal kann die Oberflächenstruktur ermittelt werden.

An Stelle der Vielzahl an einzelnen Detektoren ist es auch denkbar, einen entsprechend großen Detektor (CCD-, CMOS-Kamera) einzusetzen. Im Gegensatz zur dynamischen Laserfokussierung (siehe oben) ist es bei der hier beschriebenen Methode nicht notwendig, eine mechanisch verstellbare Linse einzusetzen. Überraschend wurde gefunden, dass es ausreicht, wenn der Abtaststrahl auf einen Punkt auf der Oberfläche fokussiert wird. Die Bewegung zwischen Gegenstand und Anordnung aus Strahlenquelle und Detektoren erfolgt dann mit konstantem Abstand zwischen Gegenstand und Anordnung. Aufgrund der Höhenunterschiede auf der Oberfläche liegen nicht alle Punkte, in denen der Abtaststrahl auf die Oberfläche trifft, exakt in der Fokusebene. Überraschenderweise kann trotzdem aus dem Abtastsignal eine Topographie abgeleitet werden. Vorzugsweise werden daher Strahlquellen eingesetzt, die eine große Fokustiefe aufweisen.

Die Bestrahlung (Abtastung) der Oberfläche kann in einem beliebigen Winkel von nahezu 0° (sofern noch Reflexion auftritt) bis 90° bezogen auf die mittlere Oberflächenebene erfolgen. Die Detektion der reflektierten Strahlung kann ebenso in einem beliebigen Winkel von nahezu 0° bis 90° bezogen auf die mittlere Oberflächenebene erfolgen.

Die Verwendung einer Vorrichtung gemäß Figur 1 hat den Vorteil, dass im Gegensatz zu den bekannten Vorrichtungen zur dynamischen Laserfokussierung keine mechanisch verstellbaren Linsen notwendig sind. Dementsprechend ist eine Vorrichtung gemäß Figur 1 weniger komplex und damit kostengünstiger und weniger fehleranfällig. Zudem kann mit einer Vorrichtung gemäß Figur 1 die Abtastung wesentlich schneller erfolgen als mit einer Vorrichtung zur dynamischen Laserfokussierung, da keine Zeit für die mechanische Nachstellung einer Linse anfällt.

Weiterhin wurde überraschend gefunden, dass zur Ermittlung einer Signatur nicht die vollständige Oberflächenstruktur bei der Abtastung erfasst werden muss. Die Oberflächenbeschaffenheit von vielen Gegenständen ist so reich an charakteristischen Merkmalen, dass zu einer Identifizierung und/oder Authentifizierung ein Bruchteil davon ausreicht. Das bedeutet, dass in der Anordnung in Figur 1 anstelle der Vielzahl an Detektoren prinzipiell ein einziger ausreicht. Dieser eine Detektor erfasst dann nicht mehr jede Krümmung der Oberfläche sondern nur die Signale, die von der Oberfläche in Richtung des Detektors gesandt werden. Das mittels des Detektors erfasste Abtastsignal ist jedoch überraschenderweise ausreichend, um eine Signatur zum Zweck der Identifizierung und/oder Authentifizierung zu erzeugen.

Die auf die Oberfläche gesandte Strahlung ist vorzugsweise nicht kohärent, um störende Interferenzerscheinungen auszuschließen. Kohärente Strahlung, die auf eine raue Oberfläche fällt, erzeugt bekanntlich Specklemuster. Die Specklemuster sind u. a. abhängig von dem Einstrahlwinkel und dem Abstand zwischen Strahlungsquelle und Oberfläche. Daher sind die Specklemuster üblicherweise nur schwer reproduzierbar. Die Specklemuster überlagern die reproduzierbaren Abtastsignale, die auf die direkte Oberflächenstruktur zurückzuführen sind, und führen zu einer Verminderung des Signal-Rausch-Verhältnisses.

Laserstrahlen weisen zwar eine hohe Intensität auf und sie lassen sich sehr gut bündeln, sie sind jedoch kohärent und führen zu den unerwünschten Specklemustem.

Vorzugsweise wird als Strahlenquelle daher ein so genannter Speckle-reduzierter Laser oder eine nicht-kohärente Strahlungsquelle wie beispielsweise eine LED (LED = light emitting diode) verwendet. Verfahren zur Reduktion von Speckleerscheinungen bei kohärenter Strahlung sind dem Fachmann bekannt (siehe z.B. DE102004062418B4). Besonders bevorzugt wird eine so genannte High Power LED verwendet. Es ist auch denkbar, LED-Arrays zu verwenden, d.h. eine Anordnung von mehreren LEDs.

In einer bevorzugten Ausführungsform wird in Schritt A 1 und/oder in Schritt B 1 die Abtastung nur entlang einer Linie vorgenommen. Besonders bevorzugt wird sowohl in Schritt A1 als auch in Schritt B1 die Abtastung nur entlang einer Linie vorgenommen. Dies bedeutet, dass im Fall der Verwendung eines Abtaststrahls gemäß Figur 1 dieser nur einmal in einer Richtung (entlang einer einzigen Linie) über die Oberfläche eines Gegenstands geführt wird, um ein Abtastsignal aufzunehmen. Die Abtastung entlang einer einzigen Linie kann wesentlich schneller erfolgen als eine Abtastung entlang mehrerer, beispielsweise parallel zueinander angeordneter Linien. Wenn sowohl in Schritt A1 als auch in Schritt B1 eine Abtastung entlang einer einzigen Linie erfolgt, ist der Zeitaufwand minimal.

Wie bereits oben erläutert ist es jedoch mit abnehmender Größe des Abtastbereichs zunehmend schwieriger bei einer späteren Abtastung den Bereich wiederzufinden, der bei der ersten Abtastung erfasst worden ist. Erfindungsgemäß wird dieses Problem dadurch gelöst, dass zur Abtastung ein linienförmiges Strahlprofil verwendet wird. Überraschend wurde nämlich gefunden, dass sich auch dann ein Abtastsignal und eine Signatur zum Zweck der Identifizierung und/oder Authentifizierung eines Gegenstands ermitteln lässt, wenn das Strahlprofil quer zur Bewegungsrichtung ausgeweitet ist. Dies ist schematisch in Figur 2 dargestellt. Ein Bereich 7 einer Oberfläche 1 eines Gegenstandes wird mittels einer Quelle für elektromagnetische Strahlung 2 bestrahlt. Ein Teil der reflektierten Strahlung 4 wird mit Hilfe eines Detektors aufgefangen, um ein Abtastsignal aufzunehmen. Der Gegenstand wird in Bezug zur Anordnung aus Strahlenquelle und Detektor bewegt (dargestellt durch den dicken schwarzen Pfeil). In der Oberflächenebene liegt ein linienförmiges Strahlprofil vor, dessen längere Ausdehnung quer zur Bewegungsrichtung liegt.

Durch die Ausweitung des Strahlprofils in die Richtung quer zur Bewegungsrichtung wird das Problem der Positionierung gelöst. Anstelle einer dünnen Linie (mit einer Breite, die der Ausdehnung des punktförmigen Strahlprofils entspricht) wird ein breiter Bereich (mit einer Breite, die der längeren Ausdehnung des linienförmigen Strahlprofils entspricht) abgetastet. Dieser breite Bereich kann bei einer späteren Abtastung entsprechend einfacher wiedergefunden werden.

Die Abtastung mit einem linienförmigen Strahlprofil gemäß Figur 2 entspricht quasi einer Mittelung über eine Vielzahl von Abtastsignalen, die aus der Abtastung mit einem punktförmigen Strahlprofil entlang einer Vielzahl an eng aneinander liegenden und parallel verlaufenden Linien resultieren. Es ist überraschend, dass aus dieser Mittelung über einen breiten Bereich auch eine Signatur erzeugt werden kann, mit der ein Gegenstand identifiziert und/oder authentifiziert werden kann.

Ein linienförmiges Strahlprofil wird hier wie folgt definiert: Üblicherweise ist die Intensität im Querschnittszentrum der Strahlung am höchsten und nimmt nach außen hin ab. Die Intensität kann in allen Richtungen gleichmäßig abnehmen - in diesem Fall liegt ein rundes Querschnittsprofil vor. In allen anderen Fällen gibt es mindestens eine Richtung, in der der Intensitätsgradient am größten ist und mindestens eine Richtung, in der der Intensitätsgradient am kleinsten ist. Im Folgenden wird unter der Strahlbreite derjenige Abstand vom Zentrum des Querschnittsprofils in Richtung des kleinsten Intensitätsgradienten verstanden, bei dem die Intensität auf die Hälfte seines Wertes im Zentrum gesunken ist. Weiterhin wird unter der Strahldicke derjenige Abstand vom Zentrum des Querschnittsprofils in Richtung des höchsten Intensitätsgradienten verstanden, bei dem die Intensität auf die Hälfte seines Wertes im Zentrum gesunken ist. Unter einem linienförmigen Strahlprofil wird ein Strahlprofil bezeichnet, bei dem die Strahlbreite um einen Faktor von mehr als 10 größer ist als die Strahldicke. Bevorzugt ist die Strahlbreite um einen Faktor von mehr als 50 größer als die Strahldicke, besonders bevorzugt um einen Faktor von mehr als 100 und ganz besonders bevorzugt um einen Faktor von mehr als 150.

Vorzugsweise liegt die Strahldicke im Bereich der mittleren Rillenbreite der vorliegenden Oberfläche (zur Definition der mittleren Rillenbreite siehe DIN EN ISO 4287:1998).

Für eine Vielzahl an Gegenständen, insbesondere für Gegenstände aus Papier, haben sich die folgenden Strahldicken und -breiten als geeignet erwiesen:
Strahlbreiten im Bereich von 2 mm bis 7 mm, bevorzugt im Bereich von 3 mm bis 6,5 mm,
besonders bevorzugt im Bereich 4 mm bis 6 mm und ganz besonders bevorzugt im Bereich 4,5 mm bis 5,5 mm.
Strahldicken im Bereich von 5 µm bis 35 µm, bevorzugt im Bereich von 10 µm bis 30 µm, besonders bevorzugt im Bereich von 15 µm bis 30 µm, ganz besonders bevorzugt im Bereich von 20 µm bis 27µm.

Dem Fachmann der Optik ist bekannt, wie ein entsprechendes Strahlprofil mittels optischer Elemente erzeugt werden kann. Optische Elemente dienen der Strahlformung und Fokussierung. Als optische Elemente werden insbesondere Linsen, Blenden, diffraktive optische Elemente und dergleichen bezeichnet.

Mit abnehmender Größe des Querschnittsprofils des Abtaststrahls im Fokuspunkt nimmt das Signal-Rausch-Verhältnis zu, da die Intensität auf eine kleinere Fläche verteilt wird. Empirisch wurde gefunden, dass es mit abnehmender Größe des Querschnittsprofils im Fokuspunkt zunehmend schwieriger wird, reproduzierbare Signale zu erzielen. Anscheinend liegt dies daran, dass die Oberfläche des zu authentifizierenden Gegenstands nicht mehr hinreichend genau gegenüber dem kleiner werdenden Querschnittsprofil positioniert werden kann. Anscheinend wird es zunehmend schwieriger, den Bereich bei einer erneuten Authentifizierung hinreichend genau zu treffen.

Überraschend wurde gefunden, dass die oben genannten Bereiche für die Strahldicke und die Strahlbreite sehr gut geeignet sind, um auf der einen Seite die für die Reproduzierbarkeit ausreichend genaue Positionierung zu erzielen, und um auf der anderen Seite ein für eine hinreichend genaue Authentifizierung ausreichendes Signal-Rausch-Verhältnis zu erzielen.

Bei einer Abtastung werden die Abtastvorrichtung und der Gegenstand, dessen Oberfläche abgetastet werden soll, in konstantem Abstand relativ zueinander bewegt. Bei der Verwendung eines linienförmigen Strahlprofils zur Abtastung eines Oberflächenbereichs liegt die Strahlbreite quer zur Bewegungsrichtung. Der Winkel zwischen Bewegungsrichtung und Richtung der Strahlbreite beträgt vorzugsweise zwischen 10° und 90°, besonders bevorzugt zwischen 45° und 90°, ganz besonders bevorzugt zwischen 70° und 90°.

Es ist sowohl eine Bewegung der Abtastvorrichtung gegenüber dem Gegenstand als auch eine Bewegung des Gegenstands gegenüber der Abtastvorrichtung denkbar.

Die Bewegung kann kontinuierlich mit gleichbleibender Geschwindigkeit, beschleunigend oder abbremsend, oder diskontinuierlich, d.h. z.B. schrittweise erfolgen. Bevorzugt erfolgt die Bewegung mit gleichbleibender Geschwindigkeit.

Bei Verwendung eines Abtaststrahls zur Abtastung einer Oberfläche gemäß Figur 1 oder 2 wird die auf mindestens einen Detektor auftreffende Strahlungsintensität als Funktion der Zeit erfasst. Üblicherweise werden mit einer konstanten Messfrequenz Messsignale erfasst und fortgeschrieben. Erfolgt die relative Bewegung zwischen Oberfläche und Detektor mit gleichbleibender Geschwindigkeit, so entspricht die Zeit zwischen zwei aufeinanderfolgend aufgenommenen Messsignalen einer definierten und gleichbleibenden Wegstrecke. In diesem Fall ist eine Transformation der als Funktion der Zeit erfassten Messsignale in eine Funktion des Ortes ohne Weiteres möglich. Bei auftretenden Geschwindigkeitsschwankungen wird vorzugsweise ein mechanischer Kodierer (Encoder) eingesetzt, der dem Fachmann der Signaltechnik bekannt ist.

Die bevorzugte Abtastung der Oberfläche mit einem linienförmigen Strahlprofil führt zu einem dritten Gegenstand der vorliegende Erfindung, einem Sensor, der vorteilhaft zur Abtastung eingesetzt werden kann:

### Sensor zur Abtastung einer Oberfläche

Ein dritter Gegenstand der vorliegenden Erfindung ist ein Sensor zur Abtastung einer Oberfläche eines Gegenstandes.

Der erfindungsgemäße Sensor umfasst mindestens
- eine Quelle für elektromagnetische Strahlung, die so angeordnet ist, dass elektromagnetische Strahlung in einem Winkel α in Bezug zur Oberflächennormalen des Gegenstands auf den Gegenstand gesandt werden kann,
- mindestens einen Fotodetektor zur Aufnahme reflektierter Strahlung, der so angeordnet ist, dass die von dem Gegenstand unter einem Winkel β in Bezug zur Oberflächennormalen des Gegenstands reflektierte Strahlung erfasst wird.

Es ist denkbar, dass die Winkel α und β gleich groß sind. Ebenso ist es denkbar, dass die Winkel α und β verschieden groß sind. Bevorzugt sind die Beträge der Winkel α und β gleich (|α| = |β|).

Die Beträge der Winkel α und β liegen im Bereich von 5° bis 90°, bevorzugt im Bereich 20° bis 80°, besonders bevorzugt im Bereich 30° bis 70°, ganz besonders bevorzugt im Bereich 40° bis 60°.

Als Quelle für elektromagnetische Strahlung können in dem erfindungsgemäßen Sensor prinzipiell alle Quellen für elektromagnetische Strahlung verwendet werden, die Strahlung emittieren, die von der Oberfläche des abzutastenden Gegenstandes zumindest teilweise reflektiert wird. Im Hinblick auf eine kompakte und kostengünstige Bauform des erfindungsgemäßen Sensors werden LEDs oder (vorzugsweise Speckle-reduzierte) Laserdioden bevorzugt. Vorzugsweise werden Strahlungsquelle verwendet, die monochromatische oder weitgehend monochromatische, für den Menschen sichtbare Strahlung emittieren; besonders bevorzugt wird eine Strahlungsquelle mit einer Wellenlänge zwischen 600 nm und 780 nm verwendet.

Bevorzugt werden in dem erfindungsgemäßen Sensor 1 bis 6 Fotodetektoren, besonders bevorzugt 1 bis 3 Fotodetektoren eingesetzt.

Als Fotodetektoren können in dem erfindungsgemäßen Sensor prinzipiell alle elektronischen Bauteile verwendet werden, die elektromagnetische Strahlung in ein elektrisches Signal umwandeln. Im Hinblick auf eine kompakte und kostengünstige Bauform des erfindungsgemäßen Sensors werden Fotodioden oder Fototransistoren bevorzugt. Fotodioden sind Halbleiter-Dioden, die elektromagnetische Strahlung an einem p-n-Übergang oder pin-Übergang durch den inneren Fotoeffekt in einen elektrischen Strom umwandeln. Ein Fototransistor ist ein Bipolartransistor mit pnp- oder npn-Schichtenfolge, dessen pn-Übergang der Basis-Kollektor-Sperrschicht für elektromagnetische Strahlung zugänglich ist. Er ähnelt einer Fotodiode mit angeschlossenem Verstärkertransistor.

Der erfindungsgemäße Sensor verfügt über optische Elemente, welche ein linienförmiges Strahlprofil erzeugen.

Das linienförmige Strahlprofil des erfindungsgemäßen Sensors ist dadurch gekennzeichnet, dass die Strahlbreite um ein Vielfaches größer ist als die Strahldicke. Bevorzugt beträgt die Strahlbreite mindestens das 50fache der Strahldicke, besonders bevorzugt beträgt sie mindestens das 100fache und ganz besonders bevorzugt mindestens das 150fache.

Die Strahlbreite liegt im Bereich von 2 mm bis 7 mm, bevorzugt im Bereich von 3 mm bis 6,5 mm, besonders bevorzugt im Bereich 4 mm bis 6 mm und ganz besonders bevorzugt im Bereich 4,5 mm bis 5,5 mm.

Die Strahldicke liegt im Bereich von 5 µm bis 35 µm bevorzugt im Bereich von 10 µm bis 30 µm, besonders bevorzugt im Bereich von 15 µm bis 30 µm, ganz besonders bevorzugt im Bereich von 20 µm bis 27µm.

Der erfindungsgemäße Sensor ist dadurch gekennzeichnet, dass die Strahlbreite quer zu der Richtung liegt, in der der erfindungsgemäße Sensor zur Abtastung über die Oberfläche eines Gegenstandes geführt wird.

Der erfindungsgemäße Sensor verfügt optional über Mittel zur Verbindung mehrerer Sensoren oder zur Verbindung eines Sensors mit einer Halterung.

Diese Mittel gestatten es, zwei oder mehrere Sensoren in vorgegebener Weise miteinander zu verbinden. Die Verbindung von zwei oder mehreren Sensoren erfolgt reversibel, d.h. sie ist lösbar.

Die Verbindungsmittel können auch dazu verwendet werden, den erfindungsgemäßen Sensor an einer Halterung anzubringen.

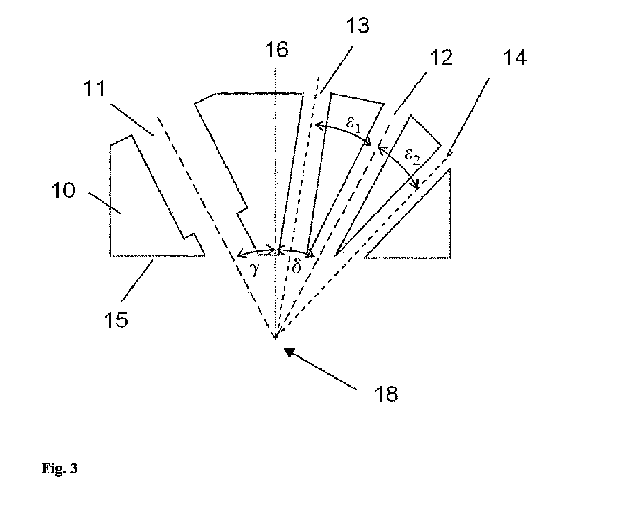

Figur 3 zeigt beispielhaft eine bevorzugte Ausführungsform eines erfindungsgemäßen Sensors ohne Strahlungsquelle und Fotodetektoren im Querschnitt von der Seite. Der Sensor umfasst einen Block 10 mit einer ausgewiesenen Außenfläche 15. Diese ausgewiesene Außenfläche - im Folgenden kurz Außenfläche genannt - ist bei der Abtastung auf die Oberfläche des entsprechenden Gegenstands gerichtet.

Der Block 10 dient der Aufnahme aller optischen Komponenten des erfindungsgemäßen Sensors. Er weist mindestens zwei Durchführungen 11, 12, auf, die in Richtung auf die ausgewiesene Außenfläche aufeinander zulaufen.

Die erste Durchführung 11 verläuft in einem Winkel γ in Bezug zur Normalen 16 der Außenfläche (kurz Außenflächennormale) und dient der Aufnahme der Quelle für elektromagnetische Strahlung.

Eine zweite Durchführung 12 verläuft in einem Winkel δ in Bezug zur Außenflächennormalen 16 und dient der Aufnahme eines Fotodetektors.

Die Beträge der Winkel γ und δ sind vorzugsweise gleich.

Die Beträge der Winkel γ und δ liegen im Bereich von 5° bis 90°, bevorzugt im Bereich 20° bis 80°, besonders bevorzugt im Bereich 30° bis 70°, ganz besonders bevorzugt im Bereich 40° bis 60°.

In einer bevorzugten Ausführungsform des erfindungsgemäßen Sensors sind ein oder zwei weitere Durchführungen 13, 14 vorhanden, die zur Aufnahme eines oder zweier weiterer Fotodetektoren dienen. Diese sind in einem Winkel ε₁ und/oder ε₂ zur zweiten Durchführung 12 angeordnet. Die Größe der Winkel ε₁ und/oder ε₂ beträgt 1° bis 20°, vorzugsweise 5° bis 15°.

Vorzugsweise liegen alle Durchführungen in einer Ebene, um eine kompakte Bauform des Sensors zu ermöglichen.

Die Verwendung eines Blocks mit zwei bis vier Durchführungen zur Aufnahme einer Strahlungsquelle und von einem oder von mehreren Fotodetektoren bietet den Vorteil, dass die optischen Komponenten einfach aber dennoch in einer definierten Weise zueinander angeordnet werden können. Bevorzugt befindet sich in der Durchführung für die Strahlungsquelle ein Anschlag. Gegen diesen Anschlag wird die Strahlungsquelle des Sensors in die Durchführung geschoben, so dass sie eine vorgegebene feste Position in Bezug zum Block und den Fotodetektoren einnimmt. Verfügt die Strahlungsquelle über bereits mit dieser verbundene optische Elemente zur Strahlformung und Fokussierung, was beispielsweise bei vielen heute kommerziell erhältlichen Strahlungsquellen üblich ist, so liegt durch die Fixierung der Strahlungsquelle zugleich der Fokuspunkt der Strahlungsquelle eindeutig fest. Die weiteren Durchführungen zur Aufnahme von Fotodetektoren können ebenfalls mit einem Anschlag versehen werden, wobei die Position der Fotodetektoren weniger genau sein muss als die Position der Strahlungsquelle.

Der Block kann in einfacher Weise z.B. mittels Spritzgussverfahren aus Kunststoff ein- oder zweistückig gefertigt werden. Mittels Spritzgussverfahren lassen sich Bauteile mit hoher Genauigkeit in großer Stückzahl und in kurzer Zeit herstellen. Dies ermöglicht eine kostengünstige Serienfertigung von hinreichend präzisen Bauteilen. Die Durchführungen können in dem Spritzgusswerkzeug bereits vorgesehen sein oder in den Block nachträglich mittels z.B. Bohrungen eingebracht werden. Bevorzugt werden alle Bestandteile des Blocks bereits im Spritzgussverfahren in einem Schritt gefertigt. Ebenso ist es denkbar, den Block beispielsweise aus Aluminium oder Kunststoff zu fräsen und die Durchführungen z.B. mittels Bohrungen zu realisieren. Weitere dem Fachmann bekannte Methoden zur Fertigung eines Blocks mit definierten Durchführungen sind denkbar.

Der Sensor kann über ein Gehäuse verfügen, in das der Block eingebracht ist. In das Gehäuse des Sensors werden vorzugsweise weitere Komponenten eingebracht, z.B. die Steuerungselektronik für die Strahlungsquelle, Signalvorverarbeitungselektronik, komplette Auswerteelektronik und Ähnliches. Das Gehäuse dient bevorzugt auch der Verankerung eines Verbindungskabels, mit dem der erfindungsgemäße Sensor mit einer Steuereinheit und/oder eine Datenerfassungseinheit zur Steuerung des Sensors und/oder zum Erfassen und Weiterverarbeiten der charakteristischen Reflexionsmuster verbunden werden kann.

Der Sensor kann optional über ein Fenster verfügen, das vor, hinter oder in der Außenfläche angebracht ist und die optischen Komponenten vor Beschädigung und Verschmutzung schützt. Bevorzugt bildet das Fenster die Außenfläche des Sensors. Das Fenster ist zumindest für die Wellenlänge der verwendeten Strahlungsquelle zumindest teilweise transparent.

Der erfindungsgemäße Sensor in Figur 3 ist weiterhin dadurch charakterisiert, dass sich die Mittelachsen der Durchführungen in einem Punkt 18 schneiden, der außerhalb des Blocks liegt. Überraschend wurde gefunden, dass es für die erfindungsgemäße Identifizierung und/oder Authentifizierung vorteilhaft ist, wenn der Schnittpunkt der Mittelachsen gleichzeitig der Fokuspunkt der Strahlungsquelle ist und in einem Abstand von 2 bis 10 mm von der Außenfläche liegt.

Zur Abtastung der Oberfläche eines Gegenstandes wird der erfindungsgemäße Sensor entsprechend in einem Abstand über diesen Gegenstand geführt, so dass der Fokuspunkt und Schnittpunkt der Mittelachsen auf der Oberfläche des Gegenstandes liegt.

Bei dem genanntem Abstandsbereich von 2 bis 10 mm ist die Positionierung der abzutastenden Oberfläche eines Gegenstands gegenüber der Strahlungsquelle und den Fotodetektoren einfach und hinreichend genau möglich. Bei einem zunehmenden Abstand zwischen Sensor und Gegenstand muss der Winkel des Sensors gegenüber der Oberfläche des Gegenstandes zunehmend genau eingehalten werden, um einen vorgegebenen Bereich der Oberfläche erfassen zu können, so dass die Anforderungen an die Positionierung steigen.

Weiterhin nimmt die Strahlungsintensität mit zunehmendem Abstand von der Strahlungsquelle ab, so dass bei einem zunehmenden Abstand zwischen Sensor und Gegenstand die entsprechend verringerte am Gegenstand ankommende Strahlungsintensität durch eine höhere Leistung der Strahlungsquelle kompensiert werden müsste.

Der erfindungsgemäße Sensor lässt sich in einer Serienfertigung im industriellen Maßstab kostengünstig fertigen, verfügt über eine kompakte Bauform, ist intuitiv und einfach zu handhaben, ist flexibel einsetzbar und erweiterbar und liefert reproduzierbare und übertragbare Ergebnisse.

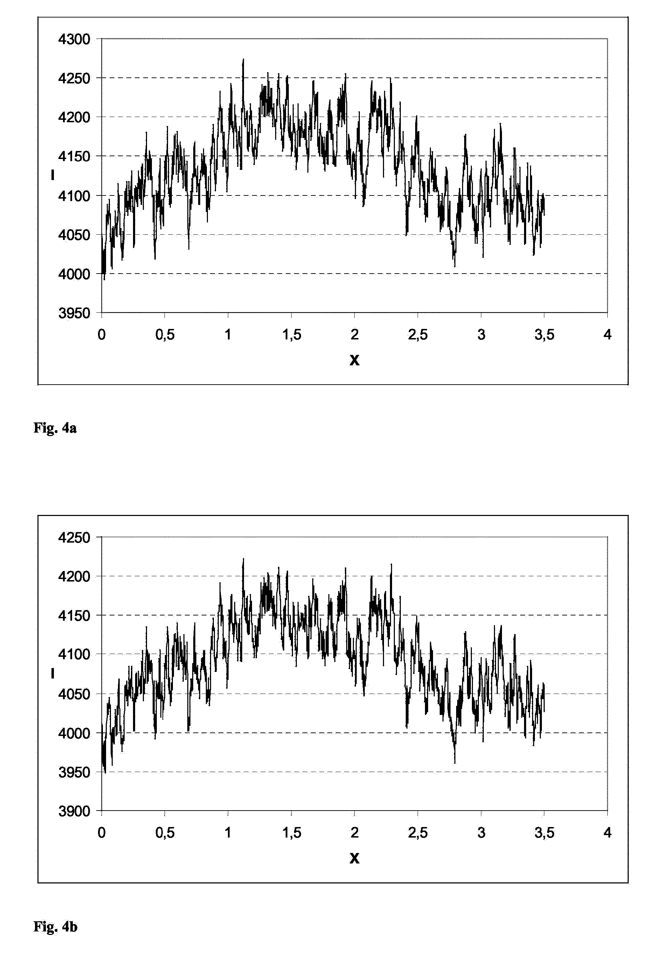

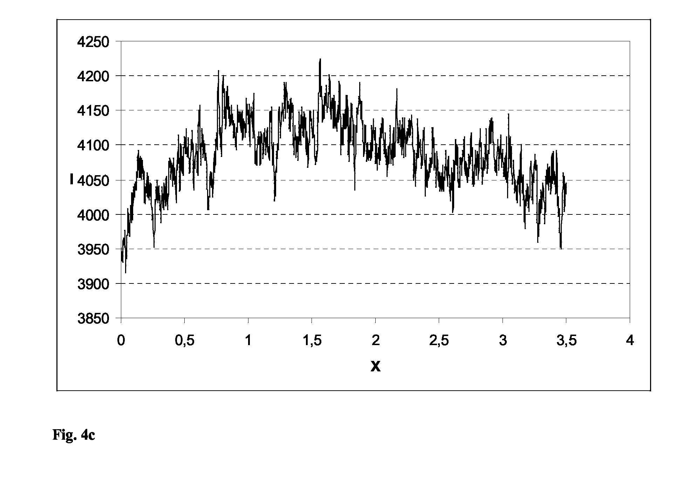

Figuren 4a, 4b und 4c zeigen Abtastsignale, die aus der Abtastung eines Gegenstands mit einem linienförmigen Strahlprofil resultieren. Das Abtastsignal wurde jeweils mit einem Sensor gemäß Figur 3 aufgenommen. Die Ordinate zeigt jeweils das Spannungssignal I (in willkürlichen Einheiten) des verwendeten Fotodetektors, das proportional zur Intensität der eintreffenden Strahlung ist. Auf der Abszisse ist der bei der Abtastung entlang einer einzigen Linie zurückgelegte Weg X in cm aufgetragen. Es wurde in allen Fällen ein einzelner Fotodetektor in der zweiten Durchführung (12) verwendet. Der abgetastete Gegenstand war ein Verbundmaterial bestehend aus dem Spezialpapier 7110 der Firma 3M (3M 7110 Lithopapier, weiß) und einer auflaminierten Schutzfolie PET Overlam RP35 der Firma UPM Raflatac. Als Strahlungsquelle wurde eine Speckle-reduzierte Laserdiode verwendet (Flexpoint Linienmodul FP-HOM-SLD, Laser Components GmbH). Das Strahlprofil war linienförmig, mit einer Strahlbreite von 5 mm und einer Strahldicke von 25 µm.

Im Fall der Figuren 4a und 4b wurde derselbe Bereich abgetastet. Die Signale sind sehr ähnlich. Im Fall der Figur 4c wurde ein anderer Bereich als in den Fällen der Figuren 4a und 4b abgetastet. Das Signal der Figur 4c ist eindeutig verschieden von den Signalen der Figuren 4a und 4b. Ein Vergleich der Signale aus den Figuren 4a und 4b erbrachte einen Korrelationskoeffizienten von 0,98, während der Vergleich der Signale aus den Figuren 4a und 4c einen Korrelationskoeffizienten von 0,6 brachte. Die Abtastsignale ließen sich auch nach längerer Zeit noch sehr gut reproduzieren.

Die Abtastsignale in den Figur 4a, 4b und 4c weisen eine Vielzahl von charakteristischen Merkmalen auf, die zur Erzeugung einer Signatur zum Zweck der Identifizierung und/oder Authentifizierung verwendet werden können. Es ist somit eine Unterscheidung von verschiedenen Gegenständen als auch eine spätere Wiedererkennung von identischen Gegenständen möglich.

Ein analoger Versuch mit einer einem High-Power-LED-Array der Fa. Blau Optoelektronik GmbH (FP-65/0,5LF-LED, Strahlbreite 10 mm, Strahldicke 60 µm) brachte ein ähnliches Ergebnis, wobei das Signal-Rauschverhältnis geringer war.

### Bezugszeichen:

- 1: Oberfläche
- 2: Quelle für elektromagnetische Strahlung
- 3: Abtaststrahl
- 4: reflektierter Strahl
- 5: Fotodetektor
- 6: linienförmiges Strahlprofil
- 7: abgetasteter Bereich
- 10: Block
- 11: erste Durchführung zur Aufnahme einer Strahlenquelle
- 12: zweite Durchführung zur Aufnahme eines Fotodetektors
- 13: weitere Durchführung zur Aufnahme eines Fotodetektors
- 14: weitere Durchführung zur Aufnahme eines Fotodetektors
- 15: Außenfläche
- 16: Außenflächennormale
- 18: Fokuspunkt

## Patentansprüche

1. Sensor zur Abtastung einer Oberfläche, mindestens umfassend
- einen Block mit einer Außenfläche, einer ersten Durchführung, die in einem Winkel γ in Bezug zur Normalen der Außenfläche auf die Außenfläche zuläuft, und einer zweiten Durchführung, die in einem Winkel δ in Bezug zur Normalen der Außenfläche auf die Außenfläche zuläuft, wobei die Beträge der Winkel γ und δ gleich sind,
- einer Strahlungsquelle, der in der ersten Durchführung angeordnet ist und einen Abtaststrahl in Richtung der Außenfläche senden kann,
- optische Elemente zur Formung eines linienförmigen Strahlprofils,
- einen Fotodetektor, der in der zweiten Durchführung angeordnet und in Richtung der Außenfläche gerichtet ist.

2. Sensor nach Anspruch 1, **dadurch gekennzeichnet, dass** die Strahlbreite im Bereich von 3 mm bis 6,5 mm, bevorzugt im Bereich von 4 mm bis 6 mm, besonders bevorzugt im Bereich von 4,5 mm bis 5,5 mm, und die Strahldicke im Bereich von 10 µm bis 30 µm, bevorzugt im Bereich von 15 µm bis 30 µm, besonders bevorzugt im Bereich von 20 µm bis 27µm liegt.

3. Sensor nach einem der Ansprüche 1 oder 2, **dadurch gekennzeichnet, dass** die Beträge der Winkel γ und δ im Bereich von 5° bis 90°, bevorzugt im Bereich 20° bis 80°, besonders bevorzugt im Bereich 30° bis 70°, ganz besonders bevorzugt im Bereich 40° bis 60° liegen.

4. Sensor nach einem der Ansprüche 1 bis 3, weiterhin umfasst zwei weitere Durchführungen zur Aufnahme von Fotodetektoren, die in einem Winkel von ε₁ bzw. ε₂ zur zweiten Durchführung angeordnet sind, wobei die Größe der Winkel ε₁ und ε₂ 1° bis 20°, vorzugsweise 5° bis 15° beträgt.

5. Sensor nach einem der Ansprüche 1 bis 4, wobei die Strahlungsquelle nicht kohärenter Strahlung erzeugen kann.

6. Sensor nach Anspruch 5, wobei die Strahlungsquelle eine oder mehrere Light-Emitting-Diode ist.

7. Sensor nach einem der Ansprüche 1 bis 5, wobei der Sensor ein einziger Detektor umfasst.
